# EUROPEAN PATENT APPLICATION

(11) **EP 4 622 337 A1**
(43) Date of publication of application: **24.09.2025**
(21) Application number: 22969595.2
(22) Date of filing: 28.12.2022
(51) Int. Cl.: H04W 28/08

(54) **COMMUNICATION METHOD AND DEVICE**

(71) Applicant: Huawei Technologies Co., Ltd., Shenzhen, Guangdong 518129 (CN)
(72) Inventor: MO, Liguang, Shenzhen, Guangdong 518129 (CN)
(74) Representative: Goddar, Heinz J.
(86) International application number: PCT/CN2022/142949
(87) International publication number: WO 2024/138443

(57) **Abstract**

A communication method and apparatus are provided. The method includes: obtaining data sending durations of N first apparatuses and data sending time windows of the N first apparatuses in a network, where the data sending durations of the N first apparatuses are in one-to-one correspondence with the data sending time windows of the N first apparatuses, and the N first apparatuses are connected to a third apparatus in the network; and determining N offsets based on the data sending durations of the N first apparatuses and the data sending time windows of the N first apparatuses, where the N offsets are in one-to-one correspondence with the N first apparatuses, and the N offsets enable time points at which data sent by the N first apparatuses arrives at the third apparatus to be different. According to the foregoing design, a traffic peak-to-average ratio of an aggregation link between the third apparatus and a second apparatus can be reduced, and bandwidth utilization of the aggregation link can be improved.

## Description

### TECHNICAL FIELD

Embodiments of this application relate to the field of wireless communication, and in particular, to a communication method and apparatus.

### BACKGROUND

In an aggregation networking scenario, sending time points of uplink data and downlink data need to comply with specific constraints. Specifically, a distributed unit (distributed unit, DU) and a radio unit (radio unit, RU) need time synchronization, and receive and send data based on a same wireless scheduling periodicity and a same periodicity boundary. Therefore, data received by a plurality of RUs is sent to a switch in parallel based on a same periodicity, and then the switch sends the data to the DU. Similarly, data sent by the DU to the plurality of RUs is also sent to the switch in parallel based on a same periodicity, and then the switch sends the data to the corresponding RUs.

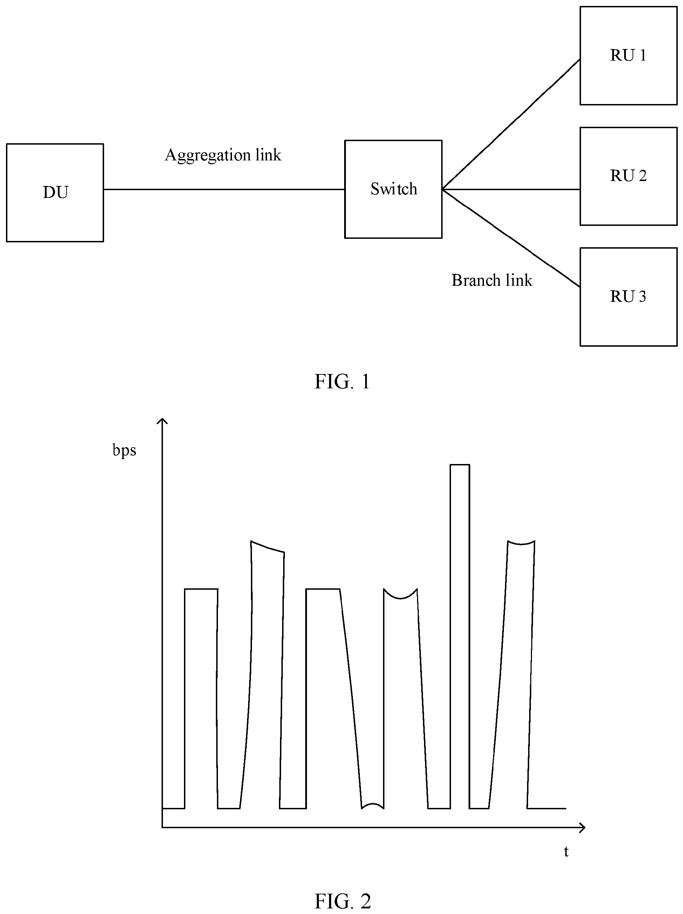

For example, in an aggregation networking scenario shown in FIG. 1, a plurality of RUs are connected to one switch, and the switch is connected to a DU. Traffic on an aggregation link (that is, a transmission link between the DU and the switch) alternates between a traffic peak and a traffic valley with a wireless scheduling periodicity, but an average bandwidth is not high, as shown in FIG. 2. Consequently, physical bandwidth utilization is low, and a requirement on an upper limit of a physical bandwidth is high.

If a peak-to-average ratio is reduced by increasing a switch buffer, costs of the switch are increased, a forwarding delay is increased, uncertainty of the delay is increased, and buffer overheads of the DU and the RU are further increased.

### SUMMARY

This application provides a communication method and apparatus, to resolve a problem that physical bandwidth utilization of an aggregation link is low and a requirement on an upper limit of a physical bandwidth is high in an aggregation networking scenario.

According to a first aspect, this application provides a communication method. The method may be performed by a second apparatus or a module (for example, a chip) in the second apparatus. The method includes: obtaining data sending durations of N first apparatuses and data sending time windows of the N first apparatuses in a network, where the data sending durations of the N first apparatuses are in one-to-one correspondence with the data sending time windows of the N first apparatuses, N is a positive integer greater than or equal to 2, and the N first apparatuses are connected to a third apparatus in the network; and determining N offsets based on the data sending durations of the N first apparatuses and the data sending time windows of the N first apparatuses, where the N offsets are in one-to-one correspondence with the N first apparatuses; and an offset corresponding to an i^{th} first apparatus in the N first apparatuses is for determining a data sending start time point of the i^{th} first apparatus in a data sending time window of the i^{th} first apparatus, the N offsets enable time points at which data sent by the N first apparatuses arrives at the third apparatus to be different, i is a positive integer, and i is any one of 1 to N.

According to the foregoing design, the N offsets are determined based on the obtained data sending durations of the N first apparatuses and the obtained data sending time windows of the N first apparatuses, so that the time points at which the data sent by the N first apparatuses corresponding to the N offsets arrives at the third apparatus are different, thereby reducing a traffic peak-to-average ratio of an aggregation link between the third apparatus and the second apparatus, improving bandwidth utilization of the aggregation link, reducing data transmission delay jitter, reducing a peak bandwidth requirement of the aggregation link, reducing a switch buffer requirement, and reducing construction costs of an operator fronthaul network.

In a possible design, the third apparatus is determined based on topology information of the network, where the network topology information of the network includes a connection relationship between the third apparatus, a fourth apparatus, and the N first apparatuses, the third apparatus is connected to the fourth apparatus and M first apparatuses in the N first apparatuses, a quantity of nodes that separate the third apparatus and the second apparatus is less than a quantity of nodes that separate the fourth apparatus and the second apparatus, M is less than N, and M is a positive integer.

According to the foregoing design, an apparatus that is in the network and that is separated from the second apparatus by a small quantity of nodes can be determined based on the topology information of the network.

In a possible design, K first apparatuses in the N first apparatuses are connected to the fourth apparatus, and respective offsets of the K first apparatuses in the N offsets enable time points at which data sent by the K first apparatuses arrives at the fourth apparatus to be different, K is less than N, and K is a positive integer.

According to the foregoing design, the time points at which the data respectively sent by the K first apparatuses connected to the fourth apparatus arrives at the fourth apparatus are different.

In a possible design, when the N offsets are determined based on the data sending durations of the N first apparatuses and the data sending time windows of the N first apparatuses, the N offsets are determined based on transmission delays between the N first apparatuses and the third apparatus, the data sending durations of the N first apparatuses, and the data sending time windows of the N first apparatuses.

According to the foregoing design, the N offsets may be determined with reference to the transmission delays between the N first apparatuses and the third apparatus, to further ensure that the time points at which the data sent by the N first apparatuses corresponding to the N offsets arrives at the third apparatus are different.

In a possible design, a start position of the data sending time window of the i^{th} first apparatus is determined based on a minimum value of a data processing delay of the i^{th} first apparatus, and an end position of the data sending time window of the i^{th} first apparatus is determined based on a maximum value of the data processing delay of the i^{th} first apparatus.

According to the foregoing design, a buffer capability of the second apparatus is not considered, and no data buffer delay is performed inside the first apparatus. The foregoing solution for determining the data sending time window is simple.

In a possible design, a start position of the data sending time window of the i^{th} first apparatus is determined based on a larger one of a minimum value of a data processing delay of the i^{th} first apparatus and a difference between an earliest time point at which the second apparatus receives data and a minimum value of a transmission delay between the i^{th} first apparatus and the second apparatus, and an end position of the data sending time window of the i^{th} first apparatus is determined based on a smaller one of a maximum value of the data processing delay of the i^{th} first apparatus and a difference between a latest time point at which the second apparatus receives the data and a maximum value of the transmission delay between the i^{th} first apparatus and the second apparatus.

According to the foregoing design, the earliest time point at which the second apparatus receives the data and the latest time point at which the second apparatus receives the data depend on a buffer capability of the second apparatus, and the data sending time window determined in the foregoing solution is more accurate.

In a possible design, a data sending duration of the i^{th} first apparatus is determined based on an average data amount of data sent by the i^{th} first apparatus to the second apparatus and a data transmission rate of the i^{th} first apparatus.

In a possible design, the data sending duration of the i^{th} first apparatus is a predicted value.

In a possible design, the N first apparatuses send the data to a same second apparatus, or the N first apparatuses send the data to different second apparatuses.

According to the foregoing design, whether the N first apparatuses send the data to a same second apparatus is not limited.

In a possible design, the method further includes: sending N pieces of first information to the N first apparatuses, where the N first apparatuses are in one-to-one correspondence with the N pieces of first information, and first information corresponding to the i^{th} first apparatus includes the offset corresponding to the i^{th} first apparatus and the data sending time window of the i^{th} first apparatus, or the data sending start time point of the i^{th} first apparatus in the data sending time window of the i^{th} first apparatus.

According to the foregoing design, corresponding offsets and corresponding data sending time windows, or corresponding data sending start time points in the data sending time windows may be respectively notifies to the N first apparatuses, so that the time points at which the data respectively sent by the N first apparatuses arrives at the third apparatus are different.

According to a second aspect, this application provides a communication method. The method may be performed by a second apparatus or a module (for example, a chip) in the second apparatus. The method includes: obtaining M1 data sending durations and M1 data sending time windows, where the M1 data sending durations are durations in which the second apparatus sends data to M1 first apparatuses, the M1 data sending time windows are time windows in which the second apparatus sends the data to the M1 first apparatuses, the M1 data sending durations are in one-to-one correspondence with the M1 data sending time windows, and M1 is a positive integer greater than or equal to 2; and determining M1 offsets based on the M1 data sending durations and the M1 data sending time windows, where the M1 offsets are in one-to-one correspondence with the M1 first apparatuses; and an offset corresponding to a j^{th} first apparatus in the M1 first apparatuses is for determining a data sending start time point of the second apparatus in a j^{th} data sending time window in the M1 data sending time windows, the M1 offsets enable time points at which the data sent by the second apparatus to the M1 first apparatuses arrives at the third apparatus to be different, the M1 first apparatuses are connected to the third apparatus, j is a positive integer, and j is any one of 1 to M1.

According to the foregoing design, the M1 offsets are determined based on the durations in which the second apparatus sends the data to the M1 first apparatuses and the time windows in which the second apparatus sends the data to the M1 first apparatuses, where the M1 offsets enable the time points at which the data sent by the second apparatus to the M1 first apparatuses arrives at the third apparatus to be different, thereby reducing a traffic peak-to-average ratio of an aggregation link between the third apparatus and the second apparatus, improving bandwidth utilization of the aggregation link, reducing data transmission delay jitter, reducing a peak bandwidth requirement of the aggregation link, reducing a switch buffer requirement, and reducing construction costs of an operator fronthaul network.

In a possible design, M2 data sending durations and M2 data sending time windows are obtained, where the M2 data sending durations are durations in which a fourth apparatus sends data to M2 first apparatuses, the M2 data sending time windows are time windows in which the fourth apparatus sends the data to the M2 first apparatuses, the M2 data sending durations are in one-to-one correspondence with the M2 data sending time windows, M2 is a positive integer, and the fourth apparatus and the second apparatus are connected to a fifth apparatus. When the M1 offsets are determined based on the M1 data sending durations and the M1 data sending time windows, the M1 offsets and the M2 offsets are determined based on the M1 data sending durations, the M1 data sending time windows, the M2 data sending durations, and the M2 data sending time windows, where the M2 offsets are in one-to-one correspondence with the M2 first apparatuses, an offset corresponding to a k^{th} first apparatus in the M2 first apparatuses is for determining a data sending start time point of the fourth apparatus in a k^{th} data sending time window in the M2 data sending time windows, k is a positive integer, and k is any one of 1 to M2; and the M1 offsets and the M2 offsets enable time points at which the data sent by the second apparatus to the M1 first apparatuses arrives at the third apparatus to be different, time points at which the data sent by the fourth apparatus to the M2 first apparatuses arrives at the third apparatus to be different, and a time point at which the data sent by the second apparatus arrives at the fifth apparatus to be different from a time point at which the data sent by the fourth apparatus arrives at the fifth apparatus, and the M2 first apparatuses are connected to the third apparatus.

According to the foregoing design, when the fourth apparatus and the second apparatus are connected to the fifth apparatus, the M1 offsets and the M2 offsets enable the time points at which the data sent by the second apparatus to the M1 first apparatuses arrives at the third apparatus to be different, the time points at which the data sent by the fourth apparatus to the M2 first apparatuses arrives at the third apparatus to be different, and the time point at which the data sent by the second apparatus arrives at the fifth apparatus to be different from the time point at which the data sent by the fourth apparatus arrives at the fifth apparatus, thereby improving bandwidth utilization of an aggregation link, reducing data transmission delay jitter, reducing a peak bandwidth requirement of the aggregation link, reducing a switch buffer requirement, and reducing the construction costs of an operator fronthaul network.

In a possible design, when the M1 offsets and the M2 offsets are determined based on the M1 data sending durations, the M1 data sending time windows, the M2 data sending durations, and the M2 data sending time windows, the M1 offsets and the M2 offsets are determined based on the M1 data sending durations, the M1 data sending time windows, the M2 data sending durations, the M2 data sending time windows, a transmission delay between the second apparatus and the fifth apparatus, and a transmission delay between the fourth apparatus and the fifth apparatus.

According to the foregoing design, the M1 offsets and the M2 offsets may be determined with reference to the transmission delay between the second apparatus and the fifth apparatus and the transmission delay between the fourth apparatus and the fifth apparatus, to further ensure that the time point at which the data sent by the second apparatus arrives at the fifth apparatus is different from the time point at which the data sent by the fourth apparatus arrives at the fifth apparatus.

In a possible design, a start position of the j^{th} data sending time window in the M1 data sending time windows is determined based on a sum of a minimum value of a delay corresponding to a data processing and data buffer capability of the j^{th} first apparatus and a maximum value of a transmission delay between the second apparatus and the j^{th} first apparatus, and an end position of the j^{th} data sending time window in the M1 data sending time windows is determined based on a sum of a maximum value of the delay corresponding to the data processing and data buffer capability of the j^{th} first apparatus and a minimum value of the transmission delay between the second apparatus and the j^{th} first apparatus.

In a possible design, a j^{th} data sending duration in the M1 data sending durations is determined based on an average data amount of data sent by the second apparatus to the j^{th} first apparatus and a data transmission rate of the second apparatus.

The M1 data sending durations may be predicted values.

In a possible design, the data is respectively sent to the M1 first apparatuses based on the M1 offsets.

According to a third aspect, an embodiment of this application provides a communication apparatus. The apparatus may be a second apparatus or a module (for example, a chip) in the second apparatus. The apparatus has a function of implementing any one of implementations in the first aspect and the second aspect. The function may be implemented by hardware, or may be implemented by hardware executing corresponding software. The hardware or the software includes one or more modules corresponding to the function.

According to a fourth aspect, an embodiment of this application provides a communication apparatus, including a processor and a memory. The memory is configured to store computer instructions. When the apparatus runs, the processor executes the computer instructions stored in the memory, to enable the apparatus to perform any one of the implementations in the first aspect and the second aspect.

According to a fifth aspect, an embodiment of this application provides a communication apparatus, including a unit or means (means) configured to perform steps of any one of the implementations in the first aspect and the second aspect.

According to a sixth aspect, an embodiment of this application provides a communication apparatus, including a processor and an interface circuit. The processor is configured to: communicate with another apparatus through the interface circuit; and perform any one of the implementations in the first aspect and the second aspect. There are one or more processors.

According to a seventh aspect, an embodiment of this application provides a communication apparatus, including a processor coupled to a memory. The processor is configured to invoke a program stored in the memory, to perform any one of the implementations in the first aspect and the second aspect. The memory may be located inside or outside the apparatus. There may be one or more processors.

According to an eighth aspect, an embodiment of this application further provides a computer-readable storage medium. The computer-readable storage medium stores instructions, and when the instructions are run on a communication apparatus, any one of the implementations in the first aspect and the second aspect is performed.

According to a ninth aspect, an embodiment of this application further provides a computer program product. The computer program product includes a computer program or instructions. When the computer program or the instructions are run by a communication apparatus, any one of the implementations in the first aspect and the second aspect is performed.

According to a tenth aspect, an embodiment of this application further provides a chip system, including a processor, configured to perform any one of the implementations in the first aspect and the second aspect.

According to an eleventh aspect, an embodiment of this application further provides a communication system, including a second apparatus, a plurality of first apparatuses, and a third apparatus that are configured to perform any one of the implementations in the first aspect and the second aspect. The plurality of first apparatuses are connected to the third apparatus.

### BRIEF DESCRIPTION OF DRAWINGS

FIG. 1 is a diagram of an aggregation networking scenario according to this application;
FIG. 2 is a diagram of traffic on an aggregation link according to this application;
FIG. 3 is a diagram of a possible and non-limiting system to which this application is applied;
FIG. 4A is a diagram of another aggregation networking scenario according to this application;
FIG. 4B is a diagram of still another aggregation networking scenario according to this application;
FIG. 4C is a diagram in which an aggregation network is a ring network according to this application;
FIG. 5 is a diagram of various delays in an uplink direction and a downlink direction according to this application;
FIG. 6 is an overview flowchart of a communication method according to this application;
FIG. 7 is a diagram of yet another aggregation networking scenario according to this application;
FIG. 8 is a diagram of determining an offset in an uplink direction according to this application;
FIG. 9 is an overview flowchart of another communication method according to this application;
FIG. 10 is a diagram of determining an offset in a downlink direction according to this application;
FIG. 11 is a diagram of traffic on an aggregation link obtained by using an embodiment of this application according to this application; and
FIG. 12 is a diagram of a structure of a possible communication apparatus according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. The terms "first" and "second", corresponding term numbers, and the like in this specification, the claims, and the accompanying drawings of this application are used to distinguish between similar objects, and are not necessarily used to describe a specific sequence or order. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

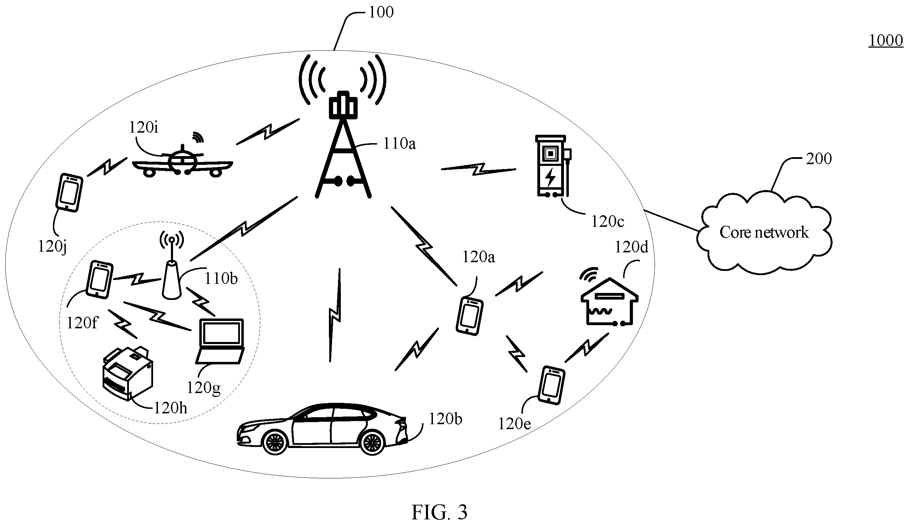

FIG. 3 is a diagram of a possible and non-limiting system. As shown in FIG. 3, the communication system 1000 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include other RAN nodes, for example, a wireless relay device and/or a wireless backhaul device (not shown in FIG. 3). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4G or 5G mobile communication system, or a future-oriented evolved system (for example, a 6G mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates the foregoing two or more systems.

The RAN node 110 may also be sometimes referred to as an access network device, a RAN entity, an access node, or the like, and forms a part of the communication system, to help the terminal 120 implement radio access. A plurality of RAN nodes 110 in the communication system 1000 may be nodes of a same type, or may be nodes of different types. In some scenarios, roles of the RAN node 110 and the terminal 120 are relative. For example, a network element 120i in FIG. 3 may be a helicopter or an uncrewed aerial vehicle, and may be configured as a mobile base station. For the terminal 120j that accesses the RAN 100 through the network element 120i, the network element 120i is a base station. For a base station 110a, the network element 120i is a terminal. The RAN node 110 and the terminal 120 are sometimes referred to as communication apparatuses. For example, a network element 110a and a network element 110b in FIG. 1 may be understood as communication apparatuses having a base station function, and a network element 120a to a network element 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 3), a micro base station or an indoor station (for example, 110b in FIG. 3), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a roadside unit (roadside unit, RSU).

In another possible scenario, the plurality of RAN nodes coordinate to assist the terminal in implementing radio access, and different RAN nodes respectively implement some functions of a base station. For example, the RAN node may be a central unit (central unit, CU), a DU, a CU-control plane (control plane, CP), a CU-user plane (user plane, UP), an RU, or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination thereof.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

The following describes technical concepts that may be used in this application.

Fronthaul is a data transmission path between a DU and an RU.

A downlink direction is a data transmission direction from the DU to the RU.

An uplink direction is a data transmission direction from the RU to the DU.

A wireless scheduling periodicity includes a subframe periodicity and a symbol periodicity. The subframe periodicity corresponds to a wireless user data scheduling periodicity described in the 3GPP specification. For example, the subframe periodicity is 1 millisecond (ms) or 0.5 ms. The symbol periodicity corresponds to a sending time period of an orthogonal frequency division multiplexing (orthogonal frequency division multiplexing, OFDM) symbol (Symbol) described in the 3GPP specification. For example, the symbol periodicity is 0.66 microseconds (µs) or 0.33 µs.

A peak-to-average ratio is a ratio of peak traffic to average traffic, and indicates traffic evenness.

Embodiments of this application may be applied to a centralized radio access network (centralized RAN, CRAN), where the CRAN may also be referred to as an aggregation network. In a CRAN deployment mode, a DU is located in a central equipment room, and an RU is distributed at a remote site. A distance between the DU and the RU is long. A characteristic of a CRAN networking topology is that one DU is connected to a plurality of RUs. Therefore, a link aggregation device is usually added between the DU and the RU to save a long-distance optical fiber. The link aggregation device includes a passive wavelength division device, an active switch device, and the like. The link aggregation device is referred to as a switch for short below.

In addition, embodiments of this application may be further applied to another network. This is not limited in this application. The following uses an aggregation network as an example for description.

The following describes several possible networking scenarios of the aggregation network by using examples.

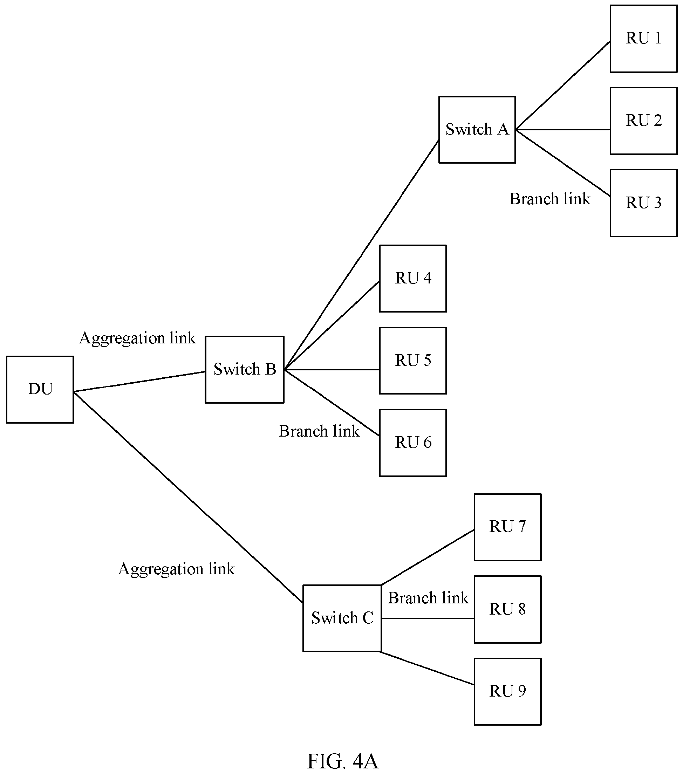

Scenario 1: The aggregation network includes one DU, a plurality of RUs, and a plurality of switches. Each switch is connected to at least two RUs, a link between the DU and the switch is referred to as an aggregation link, and a link between the switch and the RU is referred to as a branch link, as shown in FIG. 1 and FIG. 4A.

There may be at least one root switch in the plurality of switches, and the root switch is connected to the DU, as shown in FIG. 4A.

In FIG. 4A, an RU 1 to an RU 3 are connected to a switch A, an RU 4 to an RU 6 are connected to a switch B, the switch A is connected to the switch B, the switch B is connected to the DU, an RU 7 to an RU 9 are connected to a switch C, and the switch C is connected to the DU.

Scenario 2: The aggregation network includes a plurality of DUs, a plurality of RUs, and a plurality of switches. A switch connected to the DU may also be referred to as a switch on a DU side, and the plurality of DUs may be connected to a same switch. A switch connected to the RU may also be referred to as a switch on an RU side, and the switch on the RU side is connected to at least two RUs. A link between the switch on the DU side and the switch on the RU side is referred to as an aggregation link.

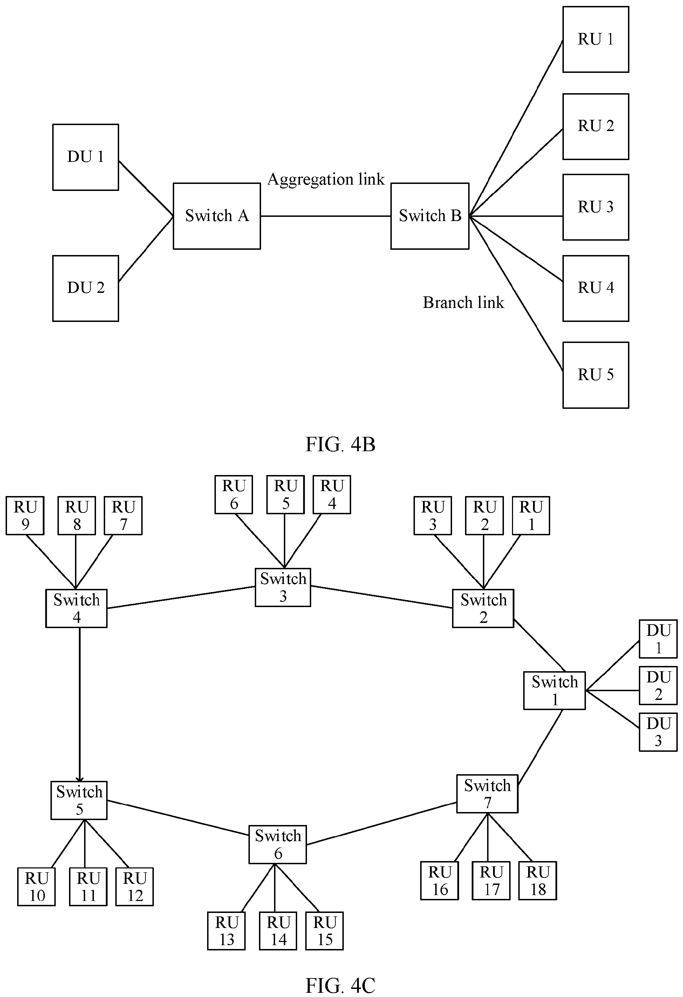

As shown in FIG. 4B, a DU 1 and a DU 2 are connected to a switch A, an RU 1, an RU 2, and an RU 3 are connected to a switch B, and the switch A is connected to the switch B.

Scenario 3: The aggregation network is a ring network, the aggregation network includes a plurality of DUs, a plurality of RUs, and a plurality of switches, and the switches are connected to form a ring network, as shown in FIG. 4C.

In FIG. 4C, the aggregation network includes seven switches, and a switch 1 to a switch 7 form a ring network. The switch 1 is connected to three DUs, and each switch other than the switch 1 is connected to three RUs.

It may be understood that the foregoing Scenario 1 to Scenario 3 are merely examples and are not intended to limit embodiments of this application.

This application separately proposes a concept of a time window for uplink data transmission and a concept of a time window for downlink data transmission. The time window for uplink data transmission is a time window in which an RU sends data, that is, a time window in which the RU sends data to a DU, and may also be referred to as a data sending time window of the RU. When the RU sends data to different DUs, the data sending time window of the RU may vary. The time window for downlink data transmission is a time window in which a DU sends data, that is, a time window in which the DU sends data to an RU, and may also be referred to as a data sending time window of the DU. When the DU sends data to different RUs, the data sending time window of the DU may vary.

### (1) Data sending time window of the RU

In an uplink direction, a terminal needs to send data at a periodicity boundary of a wireless scheduling periodicity. The RU processes the data received from the terminal, and sends the processed data to the DU. Therefore, the data sending time window of the RU is after the periodicity boundary.

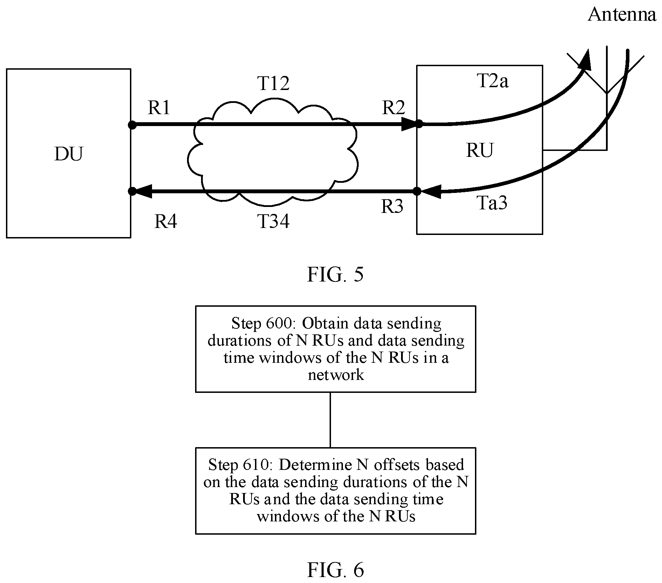

The data sending time window of the RU is related to a transmission delay (T34) for the RU to send data to the DU, a delay (T3a) for the RU to process data, and a data buffer capability of the DU, as shown in FIG. 5. The data buffer capability of the DU is an optional factor, and the data sending time window of the RU may be determined by the DU. It may be understood that the data sending time window of the RU may be further related to another factor. This is not limited in this application.

In the uplink direction, the data sending time window of the RU may be determined in, but not limited to, the following manners.

Manner 1: If the data buffer capability of the DU is not considered, in other words, the DU can receive all data sent by the RU when no data buffer delay is performed inside the RU, the data sending time window of the RU may be determined in the following manner.

A start position of the data sending time window of the RU is determined based on a minimum value of a data processing delay of the RU, and an end position of the data sending time window of the RU is determined based on a maximum value of the data processing delay of the RU.

For example, if the maximum value of the data processing delay (T3a) of the RU is Ta3max, and the minimum value is Ta3min, the data sending time window of the RU is [Ta3min, Ta3max]. In other words, the RU does not buffer the data, processes the data received from the terminal, and determines the start position and the end position of the data sending time window of the RU based only on the data processing delay of the RU.

Correspondingly, the DU also needs to have a time window for receiving data, and allows a plurality of data packets in a same periodicity to arrive at different moments in the time window. The data receiving time window of the DU is [Ta4min, Ta4max], where Ta4min=Ta3min+T34min, and Ta4max=Ta3max+T34max.

Manner 2: If the data buffer capability of the DU, that is, an inherent capability of the DU, is considered, the data sending time window of the RU may be determined in the following manner.

A start position of the data sending time window of the RU is determined based on a larger one of a minimum value of a data processing delay of the RU and a difference between an earliest time point at which the DU receives data and a minimum value of the transmission delay between the RU and the DU, and an end position of the data sending time window of the RU is determined based on a smaller one of a maximum value of the data processing delay of the RU and a difference between a latest time point at which the DU receives the data and a maximum value of the transmission delay between the RU and the DU.

For example, the maximum value of the data processing delay (T3a) of the RU is Ta3max, the minimum value is Ta3min, the earliest time point at which the DU receives the data is marked as Ta4min*, and the latest time point at which the DU receives the data is marked as Ta4max*. In this case, the start position (that is, a left boundary) of the data sending time window of the RU is a larger one of Ta4min*- T34min and Ta3min. The end position (that is, a right boundary) of the data sending time window of the RU is a smaller one of Ta4max*-T34max and Ta3min.

### (2) Data sending time window of the DU

In a downlink direction, the RU needs to send data at a periodicity boundary of a wireless scheduling periodicity. Therefore, the DU needs to send data to the RU before the periodicity boundary. The RU receives and processes the data. After specific delay compensation is performed, the data is sent at the periodicity boundary through an antenna port. Therefore, the data sending time window of the DU is before the periodicity boundary.

For example, the data sending time window of the DU is related to a transmission delay (T12) for the DU to send data to the RU and a delay (T2a) corresponding to a data processing and data buffer capability of the RU, as shown in FIG. 5. It may be understood that the data sending time window of the DU may be further related to another factor. This is not limited in this application.

In a possible implementation, a start position of the data sending time window of the DU is determined based on a sum of a minimum value of the delay corresponding to the data processing and data buffer capability of the RU and a maximum value of the transmission delay between the DU and the RU, and an end position of the data sending time window of the DU is determined based on a sum of a maximum value of the delay corresponding to the data processing and data buffer capability of the RU and a minimum value of the transmission delay between the DU and the RU.

In the downlink direction, if the data arrives at the RU at an early time point, the RU buffers the data for a specific time period, that is, performs specific delay compensation, to enable a moment at which the data finally arrives at the antenna port to be the periodicity boundary.

A delay compensation capability of the RU is represented as a variable range of T2a. T2amin is used to represent a minimum value of T2a, T2amax is used to represent a maximum value of T2a, and a difference between T2amax and T2amin is used to represent the delay compensation capability of the RU. It is assumed that the maximum value of the transmission delay (T12) for the DU to send the data to the RU is T12max, and the minimum value is T12min. In the downlink direction, the start position (that is, a left boundary) of the data sending time window of the DU is T2amax+T12min. In other words, if a timing advance of sending data by the DU is greater than T2amax+T12min, the delay compensation capability of the RU is insufficient, and the data may arrive at the antenna port earlier than the periodicity boundary. The end position (that is, a right boundary) of the data sending time window of the DU is T2amin+T12max. In other words, if the timing advance of sending the data by the DU is less than T2amin+T12max, even if the RU does not perform compensation, the data arrives at the antenna port later than the periodicity boundary. Therefore, after capability negotiation between the DU and the RU, the DU may obtain, through calculation, that the data sending time window of the DU is [T1amax, T1amin]. T1amax and T1amin herein are both represented based on the timing advance of the periodicity: T1amax=T2amax+T12min, and T1amin=T2amin+T12max.

It may be understood that, to adapt to different intermediate transmission delays (T12 and T34), jitter of the intermediate transmission delays, and interconnection between different types of DUs and RUs, both the DU and the RU need to have a specific data buffer capability. The method for determining the data sending time window of the RU and the method for determining the data sending time window of the DU are merely examples, and are not intended to limit this application.

On this basis, this application provides a communication method, to resolve a problem that physical bandwidth utilization of an aggregation link is low and a requirement on an upper limit of a physical bandwidth is high in an aggregation networking scenario. When N RUs send data to a same DU, the following method may be performed by the DU. When the N RUs send data to at least two DUs, the following method may be performed by any one of the at least two DUs, or a designated DU in the at least two DUs. The designated DU may be agreed on in advance, or may be determined by the at least two DUs through negotiation. This is not limited in this application.

Specifically, as shown in FIG. 6, the method includes the following steps.

Step 600: Obtain data sending durations of N RUs and data sending time windows of the N RUs in a network, where the data sending durations of the N RUs are in one-to-one correspondence with the data sending time windows of the N RUs, N is a positive integer greater than or equal to 2, and the N RUs are connected to a first switch in the network.

An i^{th} RU in the N RUs is used as an example. A data sending duration of the i^{th} RU is determined based on an average data amount of data sent by the i^{th} RU to a DU and a data transmission rate of the i^{th} RU. i is a positive integer, and i is any one of 1 to N.

For example, when estimating the average data amount of the data sent by the i^{th} RU to the DU, the DU may refer to at least one of radio service load, a cell measurement result, a traffic model, cell historical data, or cell configuration information. In addition, the DU may further estimate, with reference to another parameter, the average data amount of the data sent by the i^{th} RU to the DU. This is not limited in this application.

The data transmission rate of the i^{th} RU may be an enhanced common public radio interface (enhanced common public radio interface, eCPRI) port rate of the i^{th} RU.

Because the data sent by the i^{th} RU to the DU is data sent by a terminal that accesses the i^{th} RU to the i^{th} RU, the DU may fail to obtain an accurate amount of the data sent by the terminal. Therefore, the data sending duration of the i^{th} RU is a predicted value.

For example, for the data sending time windows of the N RUs, refer to the foregoing related descriptions of the data sending time window of the RU. Details are not described herein again.

It should be noted that the N RUs may send data to a same DU, or the N RUs send the data to different DUs. This is not limited in this application. For example, as shown in FIG. 1, three RUs may send data to a same DU. For another example, as shown in FIG. 4B, the RU 1 to the RU 3 in five RUs may send data to the DU 1, and an RU 4 and an RU 5 may send data to the DU 2.

In addition, it may be understood that all RUs in the network simultaneously send data at a periodicity boundary of one wireless scheduling periodicity; or some RUs in the network simultaneously send data at a periodicity boundary of one wireless scheduling periodicity. The N RUs in this application are RUs that send data at a same moment.

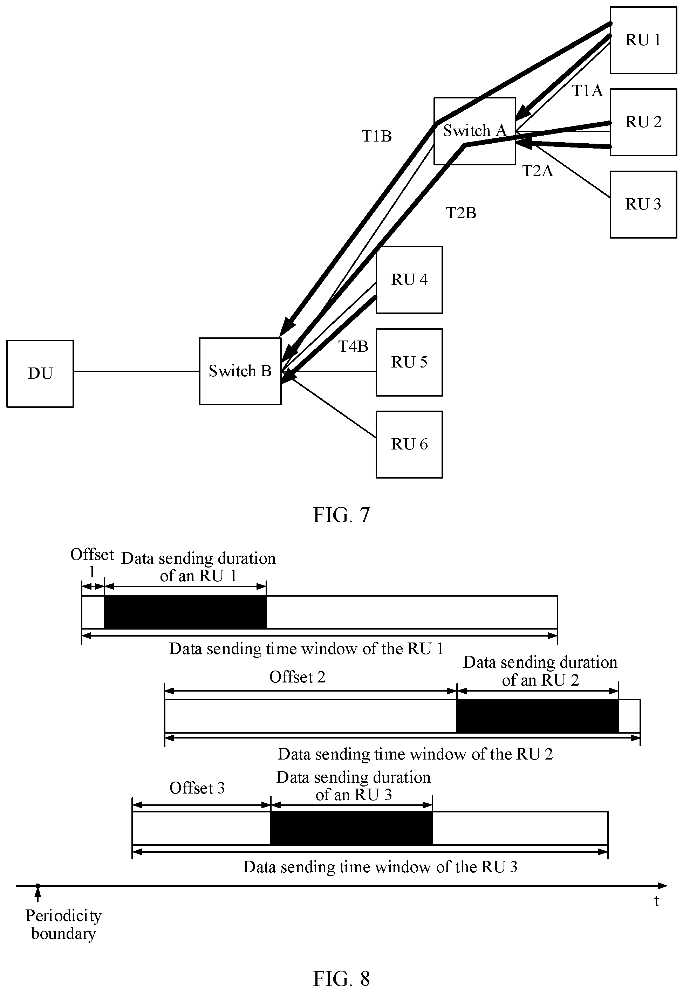

For example, in a network shown in FIG. 7, the network includes seven RUs in total. At a same moment, an RU 1, an RU 2, and an RU 4 send data to a DU, and other RUs do not send data. Therefore, only data sending durations and data sending time windows that respectively correspond to the RU 1, the RU 2, and the RU 4 need to be obtained.

When the N RUs are connected to the first switch in the network, it should be noted that the first switch herein may be a first switch directly connected to the RU, or a first switch indirectly connected to the RU. For example, the RU is connected to the first switch through another switch.

In a possible implementation, any switch is selected as the first switch based on topology information of the network.

In another possible implementation, the first switch is determined based on topology information of the network. The topology information of the network includes a connection relationship between the first switch, a second switch, and the N RUs, the first switch is connected to the second switch and M RUs in the N RUs, a quantity of nodes that separate the first switch and the DU is less than a quantity of nodes that separate the second switch and the DU, M is less than N, and M is a positive integer.

For example, when the network includes a plurality of switches, where the plurality of switches herein refer to a plurality of switches on an RU side, a root switch, a switch separated from the DU by a smallest quantity of nodes, or a switch separated from a switch on a DU side by a smallest quantity of nodes may be determined as the first switch from the plurality of switches based on the topology information of the network.

The following uses Scenario A to Scenario C as examples for description.

Scenario A: As shown in FIG. 1, it is assumed that the three RUs simultaneously send data to the DU, and the three RUs are directly connected to the switch. In this case, the switch is the first switch.

Scenario B: As shown in FIG. 7, it is assumed that the RU 1, the RU 2, and the RU 4 simultaneously send data to the DU, the RU 1 and the RU 2 are directly connected to a switch A, the RU 1 and the RU 2 are connected to a switch B through the switch A, and the RU 4 is directly connected to the switch B.

In an example, the switch A or the switch B is selected as the first switch based on topology information of the network shown in FIG. 7. If the first switch is the switch B, the N RUs include the RU 1, the RU 2, and the RU 4. If the first switch is the switch A, the N RUs include the RU 1 and the RU 2.

In another example, it can be learned from topology information of the network shown in FIG. 7 that, the switch A needs to be connected to the DU through the switch B, and the switch B is directly connected to the DU. Therefore, a quantity (0) of nodes that separate the switch B and the DU is less than a quantity (1) of nodes that separate the switch A and the DU, and the switch B is used as the first switch.

Scenario C: As shown in FIG. 4C, it is assumed that an RU 1 to an RU 3 in the switch 2 send data to a DU 1, an RU 4 to an RU 6 in the switch 3 send data to a DU 3, and an RU 8 and an RU 7 in the switch 4 send data to the DU 1. That is, the RU 1 to the RU 8 simultaneously send data.

In an example, the switch 2, the switch 3, or the switch 4 is selected as the first switch based on topology information of the network shown in FIG. 4C. If the first switch is the switch 2, the N RUs include the RU 1 to the RU 8. If the first switch is the switch 3, the N RUs include the RU 4 to the RU 8. If the first switch is the switch 4, the N RUs include the RU 7 and the RU 8.

In another example, it can be learned from topology information of the network shown in FIG. 4C that, the switch 2 is directly connected to the switch 1, the switch 2 separates the switch 3 and the switch 1, and the switch 3 and the switch 2 separate the switch 4 and the switch 1. In other words, a quantity of nodes that separate the switch 2 and the DU is 0, a quantity of nodes that separate the switch 3 and the DU is 1, a quantity of nodes that separate the switch 4 and the DU is 2, and the switch B is used as the first switch.

It may be understood that the foregoing scenarios are merely examples and are not intended to limit this application.

It can be learned that when the first switch is the root switch, or a switch separated from the DU by a small quantity of nodes, or a switch separated from the switch on the DU side by a small quantity of nodes, a quantity of RUs corresponding to the first switch is large, so that data sending time points of more RUs can be adjusted, and an effect of reducing a traffic peak-to-average ratio of an aggregation link is more apparent.

Step 610: Determine N offsets based on the data sending durations of the N RUs and the data sending time windows of the N RUs, where the N offsets are in one-to-one correspondence with the N RUs.

An offset corresponding to the i^{th} RU is for determining a data sending start time point of the i^{th} RU in a data sending time window of the i^{th} RU, and the N offsets enable time points at which the data sent by the N RUs arrives at the first switch to be different.

For example, the offset corresponding to the i^{th} RU includes an offset of the data sending start time point of the i^{th} RU relative to a start position of the data sending time window of the i^{th} RU, or an offset of the data sending start time point of the i^{th} RU relative to an end position of the data sending time window of the i^{th} RU.

That the N offsets enable time points at which the data sent by the N RUs arrives at the first switch to be different may also be described as that the N offsets enable an overlapping duration of the data sending durations of the N RUs to be as short as possible. For example, the N offsets enable start time points at which the N RUs send the data to be different, and the overlapping duration of the data sending durations of the N RUs to be as short as possible.

The networking scenario shown in FIG. 1 is used as an example. It is assumed that the three RUs (which are respectively an RU 1, an RU 2, and an RU 3) simultaneously send the data to the DU. As shown in FIG. 8, three hollow rectangles represent data sending time windows of the three RUs, which are respectively a data sending time window of the RU 1, a data sending time window of the RU 2, and a data sending time window of the RU 3. The data sending time windows of the three RUs are later than a periodicity boundary. Three black solid rectangles represent data sending durations of the three RUs, which are respectively a data sending duration of the RU 1, a data sending duration of the RU 2, and a data sending duration of the RU 3. Three offsets are determined based on the data sending durations of the three RUs and the data sending time windows of the three RUs, so that an overlapping duration of the data sending durations of the three RUs is less than a preset threshold, and time points at which the data of the three RUs arrives at the switch can be different. An offset 1 is an offset of a data sending start time point of the RU 1 relative to a start position of the data sending time window of the RU 1. An offset 2 is an offset of a data sending start time point of the RU 2 relative to a start position of the data sending time window of the RU 2. An offset 3 is an offset of a data sending start time point of the RU 3 relative to a start position of the data sending time window of the RU 3.

In addition, in some possible embodiments, when K RUs in the N RUs are connected to the second switch, respective offsets of the K RUs in the N offsets further enable time points at which data sent by the K RUs arrives at the second switch to be different, where K is less than N, and K is a positive integer. The respective offsets of the K RUs enable the time points at which the data sent by the K RUs arrives at the second switch to be different.

It may be understood that, the respective offsets of the K RUs enable an overlapping duration of data sending durations of the K RUs to be as short as possible. For example, the respective offsets of the K RUs enable start time points at which the K RUs send the data to be different, and the overlapping duration of the data sending durations of the K RUs to be as short as possible.

For example, in the foregoing Scenario B, the switch B may be used as the first switch based on the topology information of the network shown in FIG. 7. In addition, because the RU 1 and the RU 2 are directly connected to the switch A, an offset of the RU 1, an offset of the RU 2, and an offset of the RU 4 enable a time point at which the data sent by the RU 1 arrives at the switch B, a time point at which the data sent by the RU 2 arrives at the switch B, and a time point at which the data sent by the RU 4 arrives at the switch B to be different from each other. The offset of the RU 1 and the offset of the RU 2 further enable a time point at which the data sent by the RU 1 arrives at the switch A to be different from a time point at which the data sent by the RU 2 arrives at the switch A.

For another example, in the foregoing Scenario C, the switch 2 may be used as the first switch based on the topology information of the network shown in FIG. 4C. In addition, the RU 1 to the RU 3 are connected to the switch 2, the RU 4 to the RU 6 are connected to the switch 3, and the RU 8 and the RU 7 are connected to the switch 4. Therefore, offsets respectively corresponding to the RU 1 to the RU 8 enable time points at which the data respectively sent by the RU 1 to the RU 8 arrives at the switch 2 to be different, offsets respectively corresponding to the RU 4 to the RU 6 further enable time points at which the data respectively sent by the RU 4 to the RU 6 arrives at the switch 3 to be different, and offsets respectively corresponding to the RU 7 and the RU 8 further enable time points at which the data respectively sent by the RU 7 and the RU 8 arrives at the switch 4 to be different.

In addition, in a possible design, when the N offsets are determined based on the data sending durations of the N RUs and the data sending time windows of the N RUs, the N offsets are determined based on transmission delays between the N RUs and the first switch, the data sending durations of the N RUs, and the data sending time windows of the N RUs.

For example, in Scenario B, as shown in FIG. 7, it is assumed that the RU 1, the RU 2, and the RU 4 simultaneously send the data to the DU, the RU 1 and the RU 2 are directly connected to the switch A, the RU 1 and the RU 2 are connected to the switch B through the switch A, and the RU 4 is directly connected to the switch B. When the offsets respectively corresponding to the RU 1, the RU 2, and the RU 4 are determined, a transmission delay (T1A) between the RU 1 and the switch A, a transmission delay (T2A) between the RU 2 and the switch A, a transmission delay (T1B) between the RU 1 and the switch B, a transmission delay (T2B) between the RU 2 and the switch B, and a transmission delay (T4B) between the RU 4 and the switch B may be further obtained.

It is assumed that an offset of each RU is an offset of a data sending start time point of the RU relative to a start position of a data sending time window of the RU. A start position of a data sending time window of the RU 1 is the same as a start position of a data sending time window of the RU 2. When there is a requirement on a time point at which data of each RU arrives at a switch based on an actual situation, for example, a time point at which the data of the RU 1 arrives at the switch A is earlier than a time point at which the data of the RU 2 arrives at the switch A, the following describes a change of the offset of the RU 1 with reference to different scenarios.

If T1A=T2A, when the offset of the RU 1 and the offset of the RU 2 are determined, an offset (P₁₀) of the RU 1 is less than an offset (P₂₀) of the RU 2.

If T1A>T2A, when the offset of the RU 1 and the offset of the RU 2 are determined, assuming that the offset (P₂₀) of the RU 2 remains unchanged, an offset (P₁₁) of the RU 1 may be less than the offset (P₁₀) of the RU 1 in the scenario in which T1A=T2A, that is, P₁₁<P₁₀. In other words, the RU 1 sends the data earlier than that in the scenario in which T1A=T2A, so that the time point at which the data of the RU 1 arrives at the switch A is earlier than the time point at which the data of the RU 2 arrives at the switch A, and an overlapping duration of a data sending duration of the RU 1 and a data sending duration of the RU 2 is less than a preset threshold.

If T1A<T2A, when the offset of the RU 1 and the offset of the RU 2 are determined, assuming that the offset (P₂₀) of the RU 2 remains unchanged, an offset (P₁₂) of the RU 1 may be equal to the offset (P₁₀) of the RU 2 in the scenario in which T1A=T2A, or the offset (P₁₂) of the RU 1 may be less than the offset (P₁₀) of the RU 2 in the scenario in which T1A=T2A. Alternatively, the offset (P₁₂) of the RU 1 may be greater than the offset (P₁₀) of the RU 2 in the scenario in which T1A=T2A. In other words, the RU 1 may send the data later than that in the scenario in which T1A=T2A. When P₁₂=P₁₀, T1A<T2A, so that the overlapping duration of the data sending duration of the RU 1 and the data sending duration of the RU 2 is shorter than the overlapping duration in the previous scenario (for example, T1A=T2A). When P₁₂<P₁₀, T1A<T2A, so that the overlapping duration of the data sending duration of the RU 1 and the data sending duration of the RU 2 is shorter than the overlapping duration in the scenario in which P₁₂=P₁₀. When P₁₂>P₁₀, T1A<T2A, so that compensation for a longer overlapping duration of the data sending duration of the RU 1 and the data sending duration of the RU 2 caused by an increase of P₁₂ may be implemented, and even if P₁₂ increases, it can be ensured that the overlapping duration of the data sending duration of the RU 1 and the data sending duration of the RU 2 is not longer than the overlapping duration in the previous scenario (for example, T1A=T2A).

It may be understood that the foregoing descriptions are provided by using only an example in which the offset of the RU 2 remains unchanged. In addition, it may be assumed that the offset of the RU 1 remains unchanged, and the offset of the RU 2 is changed, or both the offset of the RU 1 and the offset of the RU 2 are changed. This is not limited in this application.

It should be noted that, when the N offsets are determined, if the transmission delays between the N RUs and the first switch are not considered, and the N offsets are determined based only on the data sending durations of the N RUs and the data sending time windows of the N RUs, the transmission delays between the N RUs and the first switch do not need to be considered in an overlapping condition of the determined data sending durations of the N RUs.

When the N offsets are determined, if the transmission delays between the N RUs and the first switch are considered, in other words, the N offsets are determined based on the transmission delays between the N RUs and the first switch, the data sending durations of the N RUs, and the data sending time windows of the N RUs, an overlapping condition of the determined data sending durations of the N RUs also needs to be determined with reference to the transmission delays between the N RUs and the first switch.

Similarly, the offsets respectively corresponding to the RU 1, the RU 2, and the RU 4 may be determined with reference to T1B, T2B, T4B, and the data sending durations and the data sending time windows that respectively correspond to the RU 1, the RU 2, and the RU 4.

In addition, in a possible design, after the N offsets are determined, N pieces of first information are sent to the N RUs. The N RUs are in one-to-one correspondence with the N pieces of first information, and first information corresponding to the i^{th} RU includes the offset corresponding to the i^{th} RU and the data sending time window of the i^{th} RU, or the data sending start time point of the i^{th} RU in the data sending time window of the i^{th} RU.

In addition, for a ring network scenario, as shown in FIG. 4C, when an offset of each RU is determined, it may be preferentially ensured that data arriving at a switch separated from the switch on the DU side by a smallest quantity of nodes is staggered, then it is ensured that data arriving at a switch separated from the switch on the DU side by a second smallest quantity of nodes is staggered, and so on.

The foregoing Scenario 3 is used as an example. It may be preferentially ensured that data arriving at the switch 2 is staggered, then it is ensured that data arriving at the switch 3 is staggered, and then it is ensured that data arriving at the switch 4 is staggered.

According to the foregoing method, in an uplink direction, each of the N RUs may determine a corresponding data sending time point based on a corresponding offset, so that the time points at which the data sent by the N RUs arrives at the first switch are different, thereby reducing a traffic peak-to-average ratio of an aggregation link between the first switch and the DU, improving bandwidth utilization of the aggregation link, reducing data transmission delay jitter, reducing a peak bandwidth requirement of the aggregation link, reducing a switch buffer requirement, and reducing construction costs of an operator fronthaul network.

In the embodiment shown in FIG. 6, the RU may be a first apparatus, the DU may be a second apparatus, and the first switch may be a third apparatus. For example, the second apparatus may obtain data sending durations of N first apparatuses and data sending time windows of the N first apparatuses in the network, where the N first apparatuses are connected to the third apparatus in the network. Further, the second apparatus may determine N offsets based on the data sending durations of the N first apparatuses and the data sending time windows of the N first apparatuses, where the N offsets enable time points at which data sent by the N first apparatuses arrives at the third apparatus to be different. According to the foregoing design, the time points at which the data sent by the N first apparatuses arrives at the third apparatus may be different, thereby reducing a traffic peak-to-average ratio of an aggregation link between the third apparatus and the second apparatus, improving bandwidth utilization of the aggregation link, reducing data transmission delay jitter, reducing a peak bandwidth requirement of the aggregation link, reducing a switch buffer requirement, and reducing construction costs of an operator fronthaul network.

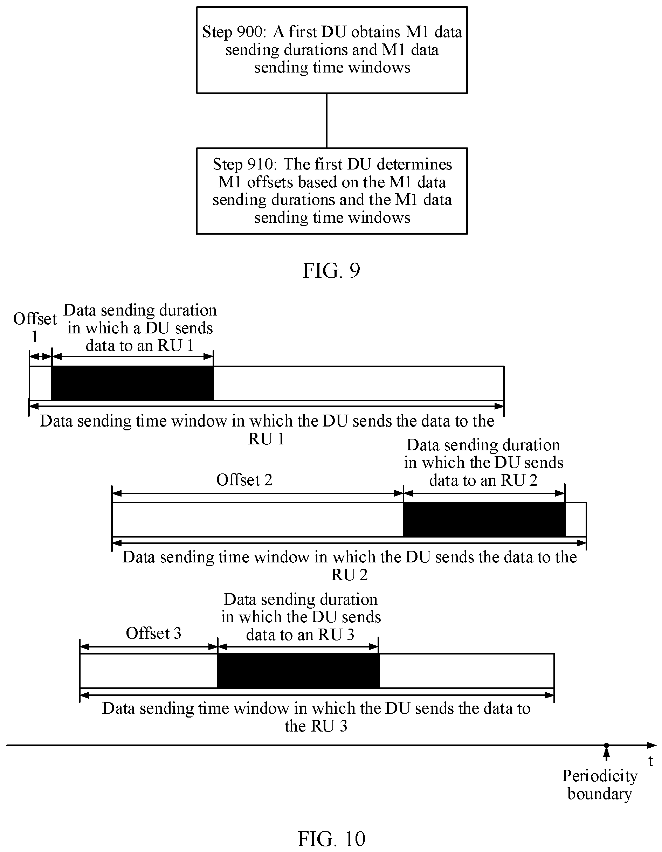

On this basis, this application further provides a communication method, to resolve a problem that physical bandwidth utilization of an aggregation link is low and a requirement on an upper limit of a physical bandwidth is high in an aggregation networking scenario. As shown in FIG. 9, the method includes the following steps.

Step 900: A first DU obtains M1 data sending durations and M1 data sending time windows, where the M1 data sending durations are durations in which the first DU sends data to M1 RUs, the M1 data sending time windows are time windows in which the first DU sends the data to the M1 RUs, the M1 data sending durations are in one-to-one correspondence with the M1 data sending time windows, and M1 is a positive integer greater than or equal to 2. The M1 RUs are connected to a first switch.

A j^{th} RU in the M1 RUs is used as an example. A j^{th} data sending duration in the M1 data sending durations is determined based on an average data amount of data sent by the first DU to the j^{th} RU and a data transmission rate of the first DU. j is a positive integer, and j is any one of 1 to M1.

The average data amount of the data sent by the first DU to the j^{th} RU is determined based on an amount of data that needs to be sent by the first DU to the j^{th} RU, that is, is determined based on an amount of to-be-sent data for the j^{th} RU.

For example, when estimating the average data amount of the data sent by the first DU to the j^{th} RU, the first DU may refer to at least one of radio service load, a cell measurement result, a traffic model, cell historical data, or cell configuration information. In addition, the first DU may further estimate, with reference to another parameter, the average data amount of the data sent by the first DU to the j^{th} RU. This is not limited in this application.

It should be noted that, although the first DU may learn of an amount of data that needs to be sent to the j^{th} RU each time, a duration in which the first DU sends the data to the j^{th} RU is generally at a microsecond level. Therefore, if the first DU re-determines an offset corresponding to the j^{th} RU and an offset corresponding to another RU each time before sending the data to the j^{th} RU, large signaling overheads and resource consumption are caused. Generally, M1 offsets are periodically adjusted. For example, a periodicity may be 30s or 60s. Therefore, a data sending duration in which the first DU sends the data to the j^{th} RU is also a predicted value.

The data transmission rate of the first DU may be a fronthaul port rate of the first DU.

For example, for the M1 data sending time windows, refer to the foregoing related descriptions of the data sending time window of the DU. Details are not described herein again.

It should be noted that the M1 RUs are connected to the first switch, and the first switch herein is generally a root switch on an RU side.

Step 910: The first DU determines the M1 offsets based on the M1 data sending durations and the M1 data sending time windows, where the M1 offsets are in one-to-one correspondence with the M1 RUs.

The offset corresponding to the j^{th} RU in the M1 RUs is for determining a data sending start time point of the first DU in a j^{th} data sending time window in the M1 data sending time windows, and the M1 offsets enable time points at which the data sent by the first DU to the M1 RUs arrives at the first switch to be different.

That the M1 offsets enable time points at which the data sent by the first DU to the M1 RUs arrives at the first switch to be different may also be described as that the M1 offsets enable an overlapping duration of the M1 data sending durations to be as short as possible. For example, the M1 offsets enable start time points at which the first DU sends the data to the M1 RUs to be different, and the overlapping duration of the M1 data sending durations to be as short as possible.

The networking scenario shown in FIG. 1 is used as an example. It is assumed that the DU simultaneously sends data to the three RUs (which are respectively the RU 1, the RU 2, and the RU 3). As shown in FIG. 10, three hollow rectangles represent data sending time windows in which the DU sends the data to the three RUs, which are respectively a data sending time window in which the DU sends the data to the RU 1, a data sending time window in which the DU sends the data to the RU 2, and a data sending time window in which the DU sends the data to the RU 1. The data sending time windows in which the DU sends the data to the three RUs are earlier than a periodicity boundary. Three black solid rectangles represent data sending durations in which the DU sends the data to the three RUs, which are respectively a data sending duration in which the DU sends the data to the RU 1, a data sending duration in which the DU sends the data to the RU 2, and a data sending duration in which the DU sends the data to the RU 3. Three offsets are determined based on the data sending time windows in which the DU sends the data to the three RUs and the data sending durations in which the DU sends the data to the three RUs, so that an overlapping duration of the data sending durations in which the DU sends the data to the three RUs is less than a preset threshold, and time points at which the data sent by the DU to the three RUs arrives at the switch are different, thereby reducing a traffic peak-to-average ratio of an aggregation link between the switch and the DU, improving bandwidth utilization of the aggregation link, reducing data transmission delay jitter, reducing a peak bandwidth requirement of the aggregation link, reducing a switch buffer requirement, and reducing construction costs of an operator fronthaul network. An offset 1 is an offset of a data sending start time point at which the DU sends the data to the RU 1 relative to a start position of a data sending time window in which the DU sends the data to the RU 1. An offset 2 is an offset of a data sending start time point at which the DU sends the data to the RU 2 relative to a start position of a data sending time window in which the DU sends the data to the RU 2. An offset 3 is an offset of a data sending start time point at which the DU sends the data to the RU 3 relative to a start position of a data sending time window in which the DU sends the data to the RU 3.

In addition, in some possible embodiments, M2 data sending durations and M2 data sending time windows are obtained, where the M2 data sending durations are durations in which a second DU sends data to M2 RUs, the M2 data sending time windows are time windows in which the second DU sends the data to the M2 RUs, the M2 data sending durations are in one-to-one correspondence with the M2 data sending time windows, and M2 is a positive integer. The second DU and the first DU are connected to a second switch, and further, the M1 offsets and M2 offsets are determined based on the M1 data sending durations, the M1 data sending time windows, the M2 data sending durations, and the M2 data sending time windows.

The M2 offsets are in one-to-one correspondence with the M2 RUs. An offset corresponding to a k^{th} RU in the M2 RUs is for determining a data sending start time point of the second DU in a k^{th} data sending time window in the M2 data sending time windows, k is a positive integer, and k is any one of 1 to M2.

The M1 offsets and the M2 offsets enable the time points at which the data sent by the first DU to the M1 RUs arrives at the first switch to be different, time points at which the data sent by the second DU to the M2 RUs arrives at the first switch to be different, and a time point at which the data sent by the first DU arrives at the second switch to be different from a time point at which the data sent by the second DU arrives at the second switch. The M2 RUs are connected to the first switch.

It may be understood that the M1 RUs and the M2 RUs may be completely the same, or completely different, or partially the same. This is not limited in this application. The first DU separately sends data, that is, M1 pieces of data, to the M1 RUs, so that the M1 RUs all receive the corresponding data and perform data processing. After specific delay compensation is performed, the M1 pieces of data are sent at a periodicity boundary through an antenna port. The second DU separately sends data, that is, M2 pieces of data, to the M2 RUs, so that the M2 RUs all receive the corresponding data and perform data processing. After specific delay compensation is performed, the M2 pieces of data are sent at a periodicity boundary through an antenna port. The foregoing periodicity boundaries are a same periodicity boundary.

For example, in the networking scenario shown in FIG. 4B, the DU 1 may send data to the RU 1 and the RU 2, and the DU 2 may send data to the RU 1 to the RU 5.

For another example, in the networking scenario shown in FIG. 4B, the DU 1 may send data to the RU 1 and the RU 2, and the DU 2 may send data to the RU 1 and the RU 2.

For another example, in the networking scenario shown in FIG. 4B, the DU 1 may send data to the RU 1 and the RU 2, and the DU 2 may send data to the RU 3 and the RU 4.

For example, in the networking scenario shown in FIG. 4B, the DU 1 may send data to the RU 1 and the RU 2, and the DU 2 may send data to the RU 1 to the RU 5. Because the DU 1 and the DU 2 are connected to the switch A, offsets respectively corresponding to the data sent by the first DU to the RU 1 and the RU 2 enable a time point at which the data sent by the first DU to the RU 1 arrives at the switch B to be different from a time point at which the data sent by the first DU to the RU 2 arrives at the switch B, and offsets respectively corresponding to the data sent by the second DU to the RU 1 to the RU 5 enable time points at which the data separately sent by the second DU to the RU 1 to the RU 5 arrives at the switch B to be different.

In addition, the offsets respectively corresponding to the data sent by the first DU to the RU 1 and the RU 2 and the offsets respectively corresponding to the data sent by the second DU to the RU 1 to the RU 5 enable a time point at which the data sent by the first DU to the RU 1 arrives at the switch A, a time point at which the data sent by the first DU to the RU 2 arrives at the switch A, a time point at which the data sent by the second DU to the RU 1 arrives at the switch A, a time point at which the data sent by the second DU to the RU 2 arrives at the switch A, a time point at which the data sent by the second DU to the RU 3 arrives at the switch A, a time point at which the data sent by the second DU to the RU 4 arrives at the switch A, and a time point at which the data sent by the second DU to the RU 5 arrives at the switch A to be different from each other.

In a possible design, when the M1 offsets and the M2 offsets are determined based on the M1 data sending durations, the M1 data sending time windows, the M2 data sending durations, and the M2 data sending time windows, the M1 offsets and the M2 offsets are determined based on the M1 data sending durations, the M1 data sending time windows, the M2 data sending durations, the M2 data sending time windows, a transmission delay between the first DU and the second switch, and a transmission delay between the second DU and the second switch.

For example, in the networking scenario shown in FIG. 4B, the DU 1 may send the data to the RU 1 and the RU 2, and the DU 2 may send the data to the RU 1 to the RU 5. The offsets respectively corresponding to the data sent by the first DU to the RU 1 and the RU 2 and the offsets respectively corresponding to the data sent by the second DU to the RU 1 to the RU 5 may be determined with reference to a transmission delay between the DU 1 and the switch A and a transmission delay between the DU 2 and the switch A.

The offsets respectively corresponding to the data sent by the first DU to the RU 1 and the RU 2 and the offsets respectively corresponding to the data sent by the second DU to the RU 1 to the RU 5 may be determined by the first DU, or the second DU, or a designated DU in the first DU and the second DU. The designated DU may be agreed on in advance, or may be determined by the first DU and the second DU through negotiation.

Further, the first DU separately sends the data to the M1 RUs based on the M1 offsets.

According to the foregoing design, when the first DU sends the data to the M1 RUs, the first DU may determine, based on an offset corresponding to each RU, a data sending time point for sending the data to the RU, so that the time points at which the data sent by the first DU to the M1 RUs arrives at the first switch are different, thereby reducing a traffic peak-to-average ratio of an aggregation link between the first DU and the first switch, improving bandwidth utilization of the aggregation link, reducing data transmission delay jitter, reducing a peak bandwidth requirement of the aggregation link, reducing a switch buffer requirement, and reducing construction costs of an operator fronthaul network.

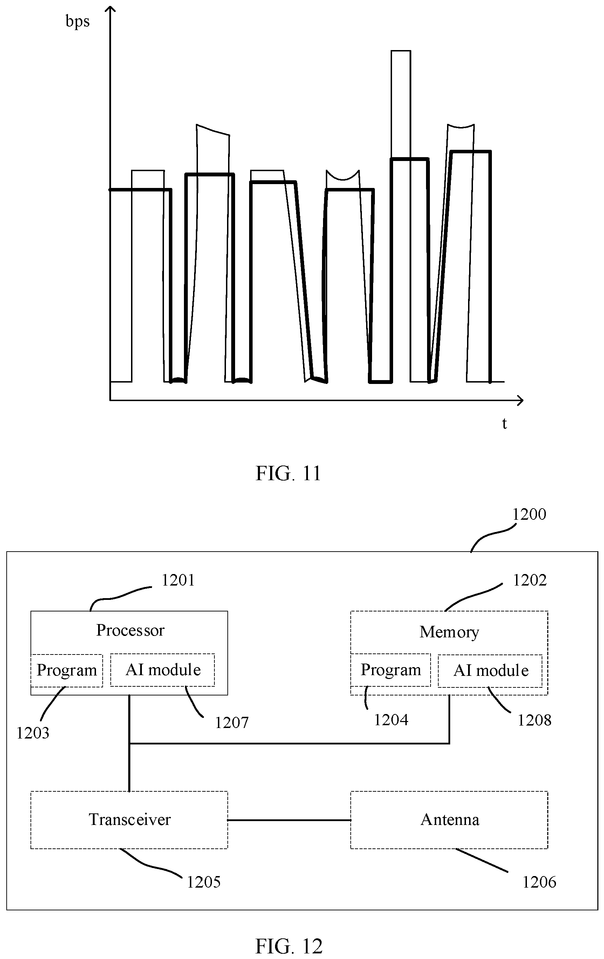

According to the foregoing design, in the aggregation networking scenario shown in FIG. 1, traffic on the aggregation link (that is, the transmission link between the DU and the switch) alternates between a traffic peak and a traffic valley with a wireless scheduling periodicity, but an average bandwidth increases. As shown in FIG. 11, compared with FIG. 2, physical bandwidth utilization of the aggregation link is improved, and a requirement on an upper limit of a physical bandwidth is reduced.

In the embodiment shown in FIG. 9, the RU may be a first apparatus, the first DU may be a second apparatus, the first switch may be a third apparatus, the second DU may be a fourth apparatus, and the second switch may be a fifth apparatus. For example, the second apparatus may obtain M1 data sending durations and M1 data sending time windows, where the M1 data sending durations are durations in which the second apparatus sends data to the M1 first apparatuses, the M1 data sending time windows are time windows in which the second apparatus sends the data to the M1 first apparatuses, and the M1 data sending durations are in one-to-one correspondence with the M1 data sending time windows. Further, M1 offsets are determined based on the M1 data sending durations and the M1 data sending time windows, where the M1 offsets enable time points at which the data sent by the second apparatus to the M1 first apparatuses arrives at the third apparatus to be different, and the M1 first apparatuses are connected to the third apparatus. According to the foregoing design, the time points at which the data sent by the second apparatus to the M1 first apparatuses arrives at the third apparatus may be different, thereby reducing a traffic peak-to-average ratio of an aggregation link between the second apparatus and the third apparatus, improving bandwidth utilization of the aggregation link, reducing data transmission delay jitter, reducing a peak bandwidth requirement of the aggregation link, reducing a switch buffer requirement, and reducing construction costs of an operator fronthaul network.

FIG. 12 is a diagram of a structure of a possible communication apparatus. It may be understood that the communication apparatus 1200 includes necessary forms, such as modules, units, elements, circuits, or interfaces, which are appropriately configured together to implement the solution. The communication apparatus 1200 may be a second apparatus (for example, a DU), or may be a component (for example, a chip) in the second apparatus, to implement the method described in the foregoing method embodiments. The communication apparatus 1200 includes one or more processors 1201. The processor 1201 may be a general-purpose processor, a dedicated processor, or the like. For example, the processor may be a baseband processor or a central processing unit. The baseband processor may be configured to process a communication protocol and communication data. The central processing unit may be configured to: control the communication apparatus, execute a software program, and process data of the software program.

Optionally, in a design, the processor 1201 may include a program 1203 (which may also be referred to as code or an instruction sometimes). The program 1203 may be run on the processor 1201, so that the communication apparatus 1200 performs the method described in the foregoing embodiments.

In still another possible design, the communication apparatus 1200 includes a circuit (not shown in FIG. 12), and the circuit is configured to implement the method described in the foregoing embodiments.

Optionally, the communication apparatus 1200 may include one or more memories 1202, and a program 1204 (which may also be referred to as code or an instruction sometimes) is stored in the memory 1202. The program 1204 may be run on the processor 1201, so that the communication apparatus 1200 performs the method described in the foregoing method embodiments.

Optionally, the processor 1201 and/or the memory 1202 may include artificial intelligence (artificial intelligence, AI) modules 1207 and 1208, and the AI module is configured to implement an AI-related function. The AI module may be implemented by using software, hardware, or a combination of software and hardware. For example, the AI module may include a radio access network intelligent controller (RAN intelligent controller, RIC) module. For example, the AI module may be a near-real-time RIC or a non-real-time RIC.

Optionally, the processor 1201 and/or the memory 1202 may further store data. The processor and the memory may be separately disposed, or may be integrated together.

Optionally, the communication apparatus 1200 may further include a transceiver 1205 and/or an antenna 1206. The processor 1201 may also be sometimes referred to as a processing unit, and controls the communication apparatus. The transceiver 1205 may be referred to as a transceiver unit, a transceiver machine, a transceiver circuit, or the like, and is configured to implement a transceiver function of the communication apparatus by using the antenna 1206.

For example, the processor 1201 invokes the memory 1202 to: obtain data sending durations of N first apparatuses and data sending time windows of N first apparatuses in a network, where the data sending durations of the N first apparatuses are in one-to-one correspondence with the data sending time windows of the N first apparatuses, N is a positive integer greater than or equal to 2, and the N first apparatuses are connected to a third apparatus in the network; and determine N offsets based on the data sending durations of the N first apparatuses and the data sending time windows of the N first apparatuses, where the N offsets are in one-to-one correspondence with the N first apparatuses; and an offset corresponding to an i^{th} first apparatus in the N first apparatuses is for determining a data sending start time point of the i^{th} first apparatus in a data sending time window of the i^{th} first apparatus, the N offsets enable time points at which data sent by the N first apparatuses arrives at the third apparatus to be different, i is a positive integer, and i is any one of 1 to N.

In a possible design, the processor 1201 is further configured to determine the third apparatus based on topology information of the network, where the topology information of the network includes a connection relationship between the third apparatus, a fourth apparatus, and the N first apparatuses, the third apparatus is connected to the fourth apparatus and M first apparatuses in the N first apparatuses, a quantity of nodes that separate the third apparatus and the second apparatus is less than a quantity of nodes that separate the fourth apparatus and the second apparatus, M is less than N, and M is a positive integer.

In a possible design, K first apparatuses in the N first apparatuses are connected to the fourth apparatus, and respective offsets of the K first apparatuses in the N offsets enable time points at which data sent by the K first apparatuses arrives at the fourth apparatus to be different, K is less than N, and K is a positive integer.

In a possible design, the processor 1201 is further configured to: when the N offsets are determined based on the data sending durations of the N first apparatuses and the data sending time windows of the N first apparatuses, determine the N offsets based on transmission delays between the N first apparatuses and the third apparatus, the data sending durations of the N first apparatuses, and the data sending time windows of the N first apparatuses.

In a possible design, a start position of the data sending time window of the i^{th} first apparatus is determined based on a minimum value of a data processing delay of the i^{th} first apparatus, and an end position of the data sending time window of the i^{th} first apparatus is determined based on a maximum value of the data processing delay of the i^{th} first apparatus.

In a possible design, a start position of the data sending time window of the i^{th} first apparatus is determined based on a larger one of a minimum value of a data processing delay of the i^{th} first apparatus and a difference between an earliest time point at which the second apparatus receives data and a minimum value of a transmission delay between the i^{th} first apparatus and the second apparatus, and an end position of the data sending time window of the i^{th} first apparatus is determined based on a smaller one of a maximum value of the data processing delay of the i^{th} first apparatus and a difference between a latest time point at which the second apparatus receives the data and a maximum value of the transmission delay between the i^{th} first apparatus and the second apparatus.

In a possible design, a data sending duration of the i^{th} first apparatus is determined based on an average data amount of data sent by the i^{th} first apparatus to the second apparatus and a data transmission rate of the i^{th} first apparatus.

In a possible design, the data sending duration of the i^{th} first apparatus is a predicted value.

In a possible design, the N first apparatuses send the data to a same second apparatus, or the N first apparatuses send the data to different second apparatuses.

In a possible design, the transceiver 1205 is configured to send N pieces of first information to N first apparatuses, where the N first apparatuses are in one-to-one correspondence with the N pieces of first information, and first information corresponding to the i^{th} first apparatus includes the offset corresponding to the i^{th} first apparatus and the data sending time window of the i^{th} first apparatus, or the data sending start time point of the i^{th} first apparatus in the data sending time window of the i^{th} first apparatus.

For another example, the processor 1201 invokes the memory 1202 to: obtain M1 data sending durations and M1 data sending time windows, where the M1 data sending durations are durations in which the second apparatus sends data to M1 first apparatuses, the M1 data sending time windows are time windows in which the second apparatus sends the data to the M1 first apparatuses, the M1 data sending durations are in one-to-one correspondence with the M1 data sending time windows, and M1 is a positive integer greater than or equal to 2; and determine M1 offsets based on the M1 data sending durations and the M1 data sending time windows, where the M1 offsets are in one-to-one correspondence with the M1 first apparatuses; and an offset corresponding to a j^{th} first apparatus in the M1 first apparatuses is for determining a data sending start time point of the second apparatus in a j^{th} data sending time window in the M1 data sending time windows, the M1 offsets enable time points at which the data sent by the second apparatus to the M1 first apparatuses arrives at the third apparatus to be different, the M1 first apparatuses are connected to the third apparatus, j is a positive integer, and j is any one of 1 to M1.

In a possible design, the processor 1201 is further configured to: obtain M2 data sending durations and M2 data sending time windows, where the M2 data sending durations are durations in which a fourth apparatus sends data to M2 first apparatuses, the M2 data sending time windows are time windows in which the fourth apparatus sends the data to the M2 first apparatuses, the M2 data sending durations are in one-to-one correspondence with the M2 data sending time windows, M2 is a positive integer, and the fourth apparatus and the second apparatus are connected to a fifth apparatus; and when the M1 offsets are determined based on the M1 data sending durations and the M1 data sending time windows, determine the M1 offsets and the M2 offsets based on the M1 data sending durations, the M1 data sending time windows, the M2 data sending durations, and the M2 data sending time windows, where the M2 offsets are in one-to-one correspondence with the M2 first apparatuses, an offset corresponding to a k^{th} first apparatus in the M2 first apparatuses is for determining a data sending start time point of the fourth apparatus in a k^{th} data sending time window in the M2 data sending time windows, k is a positive integer, and k is any one of 1 to M2; and the M1 offsets and the M2 offsets enable time points at which the data sent by the second apparatus to the M1 first apparatuses arrives at the third apparatus to be different, time points at which the data sent by the fourth apparatus to the M2 first apparatuses arrives at the third apparatus to be different, and a time point at which the data sent by the second apparatus arrives at the fifth apparatus to be different from a time point at which the data sent by the fourth apparatus arrives at the fifth apparatus, and the M2 first apparatuses are connected to the third apparatus.

In a possible design, the processor 1201 is configured to: when the M1 offsets and the M2 offsets are determined based on the M1 data sending durations, the M1 data sending time windows, the M2 data sending durations, and the M2 data sending time windows, determine the M1 offsets and the M2 offsets based on the M1 data sending durations, the M1 data sending time windows, the M2 data sending durations, the M2 data sending time windows, a transmission delay between the second apparatus and the fifth apparatus, and a transmission delay between the fourth apparatus and the fifth apparatus.

In a possible design, a start position of the j^{th} data sending time window in the M1 data sending time windows is determined based on a sum of a minimum value of a delay corresponding to a data processing and data buffer capability of the j^{th} first apparatus and a maximum value of a transmission delay between the second apparatus and the j^{th} first apparatus, and an end position of the j^{th} data sending time window in the M1 data sending time windows is determined based on a sum of a maximum value of the delay corresponding to the data processing and data buffer capability of the j^{th} first apparatus and a minimum value of the transmission delay between the second apparatus and the j^{th} first apparatus.

In a possible design, a j^{th} data sending duration in the M1 data sending durations is determined based on an average data amount of data sent by the second apparatus to the j^{th} first apparatus and a data transmission rate of the second apparatus.

In a possible design, the transceiver 1205 is configured to separately send the data to the M1 first apparatuses based on the M1 offsets.

In embodiments of this application, unless otherwise specified or there is a logic conflict, terms and/or descriptions in different embodiments are consistent and may be mutually referenced, and technical features in different embodiments may be combined to form a new embodiment based on internal logical relationships of different embodiments.

In this application, at least one means one or more, and a plurality of means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
obtaining data sending durations of N first apparatuses and data sending time windows of the N first apparatuses in a network, wherein the data sending durations of the N first apparatuses are in one-to-one correspondence with the data sending time windows of the N first apparatuses, N is a positive integer greater than or equal to 2, and the N first apparatuses are connected to a third apparatus in the network; and
determining N offsets based on the data sending durations of the N first apparatuses and the data sending time windows of the N first apparatuses, wherein the N offsets are in one-to-one correspondence with the N first apparatuses; and
an offset corresponding to an i^{th} first apparatus in the N first apparatuses is for determining a data sending start time point of the i^{th} first apparatus in a data sending time window of the i^{th} first apparatus, the N offsets enable time points at which data sent by the N first apparatuses arrives at the third apparatus to be different, i is a positive integer, and i is any one of 1 to N.

2. The method according to claim 1, further comprising:
determining the third apparatus based on topology information of the network, wherein the topology information of the network comprises a connection relationship between the third apparatus, a fourth apparatus, and the N first apparatuses, the third apparatus is connected to the fourth apparatus and M first apparatuses in the N first apparatuses, a quantity of nodes that separate the third apparatus and a second apparatus is less than a quantity of nodes that separate the fourth apparatus and the second apparatus, M is less than N, and M is a positive integer.

3. The method according to claim 2, wherein K first apparatuses in the N first apparatuses are connected to the fourth apparatus, and respective offsets of the K first apparatuses in the N offsets enable time points at which data sent by the K first apparatuses arrives at the fourth apparatus to be different, K is less than N, and K is a positive integer.

4. The method according to any one of claims 1 to 3, wherein determining the N offsets based on the data sending durations of the N first apparatuses and the data sending time windows of the N first apparatuses comprises:
determining the N offsets based on transmission delays between the N first apparatuses and the third apparatus, the data sending durations of the N first apparatuses, and the data sending time windows of the N first apparatuses.

5. The method according to any one of claims 1 to 4, wherein a start position of the data sending time window of the i^{th} first apparatus is determined based on a minimum value of a data processing delay of the i^{th} first apparatus, and an end position of the data sending time window of the i^{th} first apparatus is determined based on a maximum value of the data processing delay of the i^{th} first apparatus.

6. The method according to any one of claims 1 to 4, wherein a start position of the data sending time window of the i^{th} first apparatus is determined based on a larger one of a minimum value of a data processing delay of the i^{th} first apparatus and a difference between an earliest time point at which the second apparatus receives data and a minimum value of a transmission delay between the i^{th} first apparatus and the second apparatus, and an end position of the data sending time window of the i^{th} first apparatus is determined based on a smaller one of a maximum value of the data processing delay of the i^{th} first apparatus and a difference between a latest time point at which the second apparatus receives the data and a maximum value of the transmission delay between the i^{th} first apparatus and the second apparatus.

7. The method according to any one of claims 1 to 6, wherein a data sending duration of the i^{th} first apparatus is determined based on an average data amount of data sent by the i^{th} first apparatus to the second apparatus and a data transmission rate of the i^{th} first apparatus.

8. The method according to any one of claims 1 to 7, wherein the data sending duration of the i^{th} first apparatus is a predicted value.

9. The method according to any one of claims 1 to 8, wherein the N first apparatuses send the data to a same second apparatus, or the N first apparatuses send the data to different second apparatuses.

10. The method according to any one of claims 1 to 9, further comprising:
sending N pieces of first information to the N first apparatuses, wherein the N first apparatuses are in one-to-one correspondence with the N pieces of first information, and first information corresponding to the i^{th} first apparatus comprises the offset corresponding to the i^{th} first apparatus and the data sending time window of the i^{th} first apparatus, or the data sending start time point of the i^{th} first apparatus in the data sending time window of the i^{th} first apparatus.

11. A communication method, wherein the method comprises:
obtaining M1 data sending durations and M1 data sending time windows, wherein the M1 data sending durations are durations in which a second apparatus sends data to M1 first apparatuses, the M1 data sending time windows are time windows in which the second apparatus sends the data to the M1 first apparatuses, the M1 data sending durations are in one-to-one correspondence with the M1 data sending time windows, and M1 is a positive integer greater than or equal to 2; and
determining M1 offsets based on the M1 data sending durations and the M1 data sending time windows, wherein the M1 offsets are in one-to-one correspondence with the M1 first apparatuses; and
an offset corresponding to a j^{th} first apparatus in the M1 first apparatuses is for determining a data sending start time point of the second apparatus in a j^{th} data sending time window in the M1 data sending time windows, the M1 offsets enable time points at which the data sent by the second apparatus to the M1 first apparatuses arrives at a third apparatus to be different, the M1 first apparatuses are connected to the third apparatus, j is a positive integer, and j is any one of 1 to M1.

12. The method according to claim 11, further comprising:
obtaining M2 data sending durations and M2 data sending time windows, wherein the M2 data sending durations are durations in which a fourth apparatus sends data to M2 first apparatuses, the M2 data sending time windows are time windows in which the fourth apparatus sends the data to the M2 first apparatuses, the M2 data sending durations are in one-to-one correspondence with the M2 data sending time windows, M2 is a positive integer, and the fourth apparatus and the second apparatus are connected to a fifth apparatus; and
determining the M1 offsets based on the M1 data sending durations and the M1 data sending time windows comprises:
determining the M1 offsets and M2 offsets based on the M1 data sending durations, the M1 data sending time windows, the M2 data sending durations, and the M2 data sending time windows, wherein
the M2 offsets are in one-to-one correspondence with the M2 first apparatuses, an offset corresponding to a k^{th} first apparatus in the M2 first apparatuses is for determining a data sending start time point of the fourth apparatus in a k^{th} data sending time window in the M2 data sending time windows, k is a positive integer, and k is any one of 1 to M2; and
the M1 offsets and the M2 offsets enable time points at which the data sent by the second apparatus to the M1 first apparatuses arrives at the third apparatus to be different, time points at which the data sent by the fourth apparatus to the M2 first apparatuses arrives at the third apparatus to be different, and a time point at which the data sent by the second apparatus arrives at the fifth apparatus to be different from a time point at which the data sent by the fourth apparatus arrives at the fifth apparatus, and the M2 first apparatuses are connected to the third apparatus.

13. The method according to claim 12, wherein determining the M1 offsets and the M2 offsets based on the M1 data sending durations, the M1 data sending time windows, the M2 data sending durations, and the M2 data sending time windows comprises:
determining the M1 offsets and the M2 offsets based on the M1 data sending durations, the M1 data sending time windows, the M2 data sending durations, the M2 data sending time windows, a transmission delay between the second apparatus and the fifth apparatus, and a transmission delay between the fourth apparatus and the fifth apparatus.

14. The method according to any one of claims 11 to 13, wherein a start position of the j^{th} data sending time window in the M1 data sending time windows is determined based on a sum of a minimum value of a delay corresponding to a data processing and data buffer capability of the j^{th} first apparatus and a maximum value of a transmission delay between the second apparatus and the j^{th} first apparatus, and an end position of the j^{th} data sending time window in the M1 data sending time windows is determined based on a sum of a maximum value of the delay corresponding to the data processing and data buffer capability of the j^{th} first apparatus and a minimum value of the transmission delay between the second apparatus and the j^{th} first apparatus.

15. The method according to any one of claims 11 to 14, wherein a j^{th} data sending duration in the M1 data sending durations is determined based on an average data amount of data sent by the second apparatus to the j^{th} first apparatus and a data transmission rate of the second apparatus.

16. The method according to any one of claims 11 to 14, further comprising:
separately sending the data to the M1 first apparatuses based on the M1 offsets.

17. A communication method, wherein the method comprises:
obtaining, by a second apparatus, data sending durations of N first apparatuses and data sending time windows of the N first apparatuses in a network, wherein the data sending durations of the N first apparatuses are in one-to-one correspondence with the data sending time windows of the N first apparatuses, N is a positive integer greater than or equal to 2, and the N first apparatuses are connected to a third apparatus in the network;
determining, by the second apparatus, N offsets based on the data sending durations of the N first apparatuses and the data sending time windows of the N first apparatuses, wherein the N offsets are in one-to-one correspondence with the N first apparatuses; and an offset corresponding to an i^{th} first apparatus in the N first apparatuses is for determining a data sending start time point of the i^{th} first apparatus in a data sending time window of the i^{th} first apparatus, the N offsets enable time points at which data sent by the N first apparatuses arrives at the third apparatus to be different, i is a positive integer, and i is any one of 1 to N;
sending, by the second apparatus, N pieces of first information to the N first apparatuses, wherein the N first apparatuses are in one-to-one correspondence with the N pieces of first information, and first information corresponding to the i^{th} first apparatus comprises the offset corresponding to the i^{th} first apparatus and the data sending time window of the i^{th} first apparatus, or the data sending start time point of the i^{th} first apparatus in the data sending time window of the i^{th} first apparatus; and
sending, by each of the N first apparatuses, data to the second apparatus based on corresponding first information.

18. A communication apparatus, comprising a unit configured to perform the method according to any one of claims 1 to 16.

19. A communication apparatus, comprising a processor and a memory, wherein
the memory is configured to store computer-executable instructions; and
the processor is configured to execute the computer-executable instructions stored in the memory, to enable the communication apparatus to perform the method according to any one of claims 1 to 16.

20. A chip, wherein the chip is coupled to a memory, and the chip reads a computer program stored in the memory, to perform the method according to any one of claims 1 to 16.

21. A computer-readable storage medium, wherein the storage medium stores a computer program or instructions, and when the computer program or the instructions are executed by a communication apparatus, the method according to any one of claims 1 to 16 is implemented.

22. A computer program product, wherein the computer program product comprises a computer program, and when the computer program is run on an apparatus, the method according to any one of claims 1 to 16 is performed.

23. A communication system, wherein the system comprises a plurality of first apparatuses, a second apparatus, and a third apparatus, the plurality of first apparatuses are connected to the third apparatus, and the second apparatus performs the method according to any one of claims 1 to 16.

24. The communication system according to claim 23, wherein the first apparatus is a radio unit, the second apparatus is a distributed unit, and the third apparatus is a first switch.
